(19) Europäisches Patentamt
European Patent Office
Office européen des brevets

(11) Veröffentlichungsnummer : **0 539 325 A1**

(12) **EUROPÄISCHE PATENTANMELDUNG**

(21) Anmeldenummer : **92810757.2**

(22) Anmeldetag : **06.10.92**

(51) Int. Cl.[5] : **C08L 67/02,** C08L 25/08, // (C08L67/02, 25:08, 25:18), (C08L25/08, 67:02, 25:18)

(30) Priorität : **15.10.91 CH 3027/91**

(43) Veröffentlichungstag der Anmeldung : **28.04.93 Patentblatt 93/17**

(84) Benannte Vertragsstaaten : **CH DE FR GB IT LI NL**

(71) Anmelder : **CIBA-GEIGY AG**
**Klybeckstrasse 141**
**CH-4002 Basel (CH)**

(72) Erfinder : **Breitenfellner, Franz, Dr.**
**Konrad-Adenauer-Strasse 56**
**W-6140 Bensheim 1 (DE)**
Erfinder : **Hettrich, Gernot, Dr.**
**Hirschhorner Strasse 1**
**W-6148 Heppenheim (DE)**

(54) **Verstärkte, flammhemmende thermoplastische Polyesterformmassen.**

(57) Verstärkte, flammhemmende thermoplastische Formmassen, enthaltend

A) 10 bis 75 Gew.-%, bezogen auf die Menge der Komponenten (A) und (B), eines linearen thermoplastischen Polyesters, Copolyesters oder eines Gemisches davon,

B) 25 bis 90 Gew.-%, bezogen auf auf die Menge der Komponenten (A) und (B), eines Styrol-Acrylnitril-Copolymersates,

C) bromiertes Polystyrol in Kombination mit einer oder mehreren Antimonverbindungen als Flammschutzmittel,

D) Verstärkungsmittel, Füllstoffe oder beides und

E) übliche Zusätze,

wobei die Menge der Komponenten (A), (B), (C), (D) und (E) zusammen 100 Gew.-% ergibt, die dadurch gekennzeichnet sind, dass das Styrol-Acrylnitril-Copolymerisat (B) ein Copolymerisat aus 10 bis 85 Gew.-% Styrol, $\alpha$-Methylstyrol oder eines Gemisches davon, 5 bis 40 Gew.-% Acrylnitril und 5 bis 50 Gew.-% eines im wesentlichen halogenmethylgruppenfreien Acrylesters ist, zeichnen sich durch günstige elektrische Eigenschaften, insbesondere gute Kriechstromfestigkeit, sowie hohe Zähigkeit, Steifigkeit und Wärmeformbeständigkeit aus.

EP 0 539 325 A1

Die vorliegende Erfindung betrifft verstärkte, flammhemmende thermoplastische Formmassen auf Basis eines linearen thermoplastischen Polyesters, eines Styrol-Acrylnitril-Copolymerisates, eines bromierten Polystyrols in Kombination mit einer Antimonverbindung, eines Verstärkungsmittels und üblicher Zusätze, sowie die aus diesen Formmassen hergestellten Formkörper.

In der DE-Auslegeschrift 24 59 062 werden flammwidrige, thermoplastische glasfaserverstärkte Polyesterformmassen, die als Flammschutzmittel Polytribromstyrol enthalten, offenbart. Die daraus hergestellten Formkörper weisen zwar gute Zähigkeitseigenschaften auf, doch lassen ihre elektrischen Eigenschaften zu wünschen übrig.

Auch die in der DE-Offenlegungsschrift 25 15 473 offenbarten flammwidrigen linearen Polyester, die als Flammschutzmittel halogenierte oligomere Styrole enthalten, ergeben Formkörper mit gleichen ungünstigen elektrischen Eigenschaften.

In der DE-Auslegeschrift 24 44 584 werden thermoplastische Polyesterformmassen, die kautschukelastische Pfropfcopolymere enthalten, offenbart. Es wird angegeben, dass die Formmassen auch flammhemmende Additive auf Basis von elementarem rotem Phosphor, Phosphorverbindungen, Halogen- und Stickstoffverbindungen, Antimon-, Eisen- oder Zinkoxid enthalten können.

Im DE-Patent 27 58 497 wird eine thermoplastische Formmasse auf Basis eines linearen thermoplastischen Polyesters, eines Styrol-Acrylnitril-Copolymerisates und üblicher Zusätze beschrieben. Unter den üblichen Zusätzen wird angegeben, dass dies auch ein Flammschutzmittel sein kann, doch wird dieses nicht näher spezifiziert.

Es wurde nun gefunden, dass man bei Zusatz von bromiertem Polystyrol als organisches polymeres Flammschutzmittel in Kombination mit einer oder mehreren Antimonverbindungen zu Gemischen aus linearen Polyestern und Styrol-Acrylnitril-Copolymerisaten thermoplastische Formmassen erhält, die im Vergleich zu andere polymere oder oligomere Flammschutzmittel enthaltenden Formmassen Formkörper mit besonders guten elektrischen Eigenschaften, insbesondere einer hohen Kriechstromfestigkeit, ergeben. Ferner zeichnen sich die aus den erfindungsgemässen Formmassen hergestellten Formkörper durch eine hohe Zähigkeit, Steifigkeit und Wärmeformbeständigkeit aus.

Gegenstand vorliegender Erfindung sind somit verstärkte, flammhemmende thermoplastische Formmassen, enthaltend

A) 10 bis 75 Gew.-%, bezogen auf die Menge der Komponenten (A) und (B), eines linearen thermoplastischen Polyesters, Copolyesters oder eines Gemisches davon,

B) 25 bis 90 Gew.-%, bezogen auf auf die Menge der Komponenten (A) und (B), eines Styrol-Acrylnitril-Copolymersates,

C) bromiertes Polystyrol in Kombination mit einer oder mehreren Antimonverbindungen als Flammschutzmittel,

D) Verstärkungsmittel, Füllstoffe oder beides und

E) übliche Zusätze,

wobei die Menge der Komponenten (A), (B), (C), (D) und (E) zusammen 100 Gew.-% ergibt, dadurch gekennzeichnet, dass das Styrol-Acrylnitril-Copolymerisat (B) ein Copolymerisat aus 10 bis 85 Gew.-% Styrol, α-Methylstyrol oder ein Gemisch davon, 5 bis 40 Gew.-% Acrylnitril und 5 bis 50 Gew.-% eines im wesentlichen halogenmethylgruppenfreien Acrylesters ist.

Vorzugsweise enthalten die erfindungsgemässen Formmassen

A) 15 bis 75 Gew.-%, bezogen auf die Menge der Komponenten (A) und (B), eines linearen thermoplastischen Polyesters, Copolyesters oder eines Gemisches davon,

B) 25 bis 85 Gew.-%, bezogen auf auf die Menge der Komponenten (A) und (B), eines modifizierten Styrol-Acrylnitril-Copolymersates,

C) 3 bis 30 Gew.-%, bezogen auf die Gesamtmischung, bromiertes Polystyrol in Kombination mit einer oder mehreren Antimonverbindungen,

D) 5 bis 50 Gew.-%, bezogen auf die Gesamtmischung, Glasfasern, Füllstoffe oder beides und

E) als übliche Zusätze Gleitmittel, Stabilisatoren, Pigmente, Lichtschutzmittel, Calciumhydrosilikat, Polytetrafluorethylen oder Tricalciumphosphat.

Für die erfindungsgemässen Formmassen ist eine Vielzahl linearer thermopolastischer Polyester (A) geeignet. Die Polyester sind bevorzugt kristallin oder teilkristallin und weisen in diesem Fall insbesondere Schmelzpunkte von mindestens 150°C auf. Sie können jedoch auch in amorpher Form vorliegen, wobei dann der Polyester bevorzugt eine Glasumwandlungstemperatur von mindestens 100°C, besonders mindestens 130°C, aufweist. Die Intrinsic-Viskosität der Polyester beträgt bevorzugt mindestens 0,6 dl/g, insbesondere mindestens 0,8 dl/g, gemessen an einer Lösung von 1 g Polyester in 100 ml eines aus gleichen Teilen Phenol und 1,2-Dichlorbenzol bestehenden Lösungsmittels bei 30°C.

Bei den Polyestern kann es sich um Homo- oder Mischpolyester handeln, die aus aliphalischen, cycloaliphatischen oder aromatischen Dicarbonsäuren, Diolen oder Hydroxycarbonsäuren aufgebaut sind. Ferner sind auch Mischungen dieser Polyester geeignet. Ihre Zusammensetzung richtet sich im wesentlichen nach den gewünschten Eigenschaften für einen bestimmten Verwendungszweck.

Die aliphatischen Dicarbonsäuren können 2 bis 40 C-Atome, die cycloaliphatischen Dicarbonsäuren 6 bis 10 C-Atome, die aromatischen Dicarbonsäuren 8 bis 14 C-Atome und die aliphatischen Hydroxycarbonsäuren 7 bis 14 C-Atome enthalten.

Die aliphatischen Diole können 2 bis 12 C-Atome, die cycloaliphatischen Diole 5 bis 8 C-Atome und die aromatischen Diole 6 bis 16 C-Atome enthalten.

Als aromatische Diole werden jene bezeichnet, bei denen zwei Hydroxygruppen an Kohlenwasserstoffreste aromatischen Charakters gebunden sind.

Ferner ist es möglich, dass die Polyester mit geringen Mengen, z.B. 0,1 bis 3 Mol-%, eines mehr als zweifunktionellen Monomeren, wie z.B. Pentaerythrit oder Trimellitsäure, verzweigt sind.

Bei Polyestern aus mindestens 3 Monomeren können diese statistisch verteilt sein oder es kann sich um Blockpolymere handeln. Auch Copolymere von Polycarbonaten und Polyestern werden hier als Polyester bezeichnet.

Geeignete Dicarbonsäuren sind lineare und verzweigte gesättigte aliphatische Dicarbonsäuren, aromatische Dicarbonsäuren und cycloaliphatische Dicarbonsäuren.

Als aliphatische Dicarbonsäuren kommen jene mit 2 bis 40 C-Atomen in Frage, z.B. Oxalsäure, Malonsäure, Dimethylmalonsäure, Bernsteinsäure, Octadecylbernsteinsäure, Pimelinsäure, Adipinsäure, Trimethyladipinsäure, Sebacinsäure, Azelainsäure und Dimersäuren, d.h., Dimerisationsprodukte von ungesättigten aliphatischen Carbonsäuren, wie Ölsäure.

Als cycloaliphatische Dicarbonsäuren kommen in Frage: 1,3-Cyclobutandicarbonsäure, 1,3-Cyclopentandicarbonsäure, 1,3- und 1,4-Cyclohexandicarbonsäure, 1,3- und 1,4-Dicarboxylmethylcyclohexan, 4,4′-Dicyclohexyldicarbonsäure.

Als geeignete aromatische Dicarbonsäuren kommen in Frage: Insbesondere Terephthalsäure, Isophthalsäure, Phthalsäure, sowie 1,3-, 1,4-, 2,6- oder 2,7-Naphthalindicarbonsäure, 4,4′-Diphenyldicarbonsäure, 4,4′-Diphenylsulphondicarbonsäure, 1, 1,3-Trimethyl-5-carboxyl-3-(p-carboxylphenyl)-indan, 4,4′-Diphenyletherdicarbonsäure, Bis-p-(carboxylphenyl)methan.

Bevorzugt sind Polyester mit aromatischen Dicarbonsäuren, besonders mit Terephthalsäure, Isophthalsäure oder Phthalsäure.

Weitere geeignete Dicarbonsäuren sind solche, die -CO-NH-Gruppen enthalten; sie sind in der DE-OS 24 14 349 beschrieben. Auch Dicarbonsäuren, die N-heterocyclische Ringe enthalten, sind geeignet, z.B. solche die sich von carboxylalkylierten, carboxylphenylierten oder carboxylbenzylierten Monoamino-s-triazindicarbonsäuren (vgl. DE-OS 21 21 184 und 25 33 675), Mono- oder Bishydantionen, gegebenenfalls halogenierten Benzimidazolonen oder Parabansäure ableiten. Die Carboxylalkylgruppe kann hierbei 3 bis 20 C-Atome enthalten.

Geeignete aliphatische Diole sind die linearen und verzweigten aliphatischen Glykole, besonders die mit 2 bis 12, insbesondere 2 bis 6 Kohlenstoffatomen im Molekül, z.B.: Ethylenglykol, 1,2- oder 1,3-Propylenglykol, 1,2-, 1,3-, 2,3- oder 1,4-Butandiol, Pentylglykol, Neopentylglykol, 1,6-Hexandiol und 1,12-Dodecandiol. Ein geeignetes cycloaliphatisches Diol ist z.B. 1,4-Dihydroxycyclohexan. Weitere geeignete aliphatische Diole sind z.B. 1,4-Dihydroxymethylcyclohexan, aromatisch-aliphatische Diole, wie p-Xylylenglykol oder 2,5-Dichlor-p-xylylenglykol, 2,2-(β-Hydroxyethoxyphenyl)-propan sowie Polyoxyalkylenglykol, wie Diethylenglykol, Triethylenglykol oder Polyethylenglykol. Die Alkylendiole sind bevorzugt linear und enthalten insbesondere 2 bis 4 Kohlenstoffatome.

Bevorzugte Diole sind die Alkylendiole, 1,4-Dihydroxycyclohexan und 1,4-Dihydroxymethylcyclohexan. Insbesondere bevorzugt sind Ethylenglykol und 1,4-Butandiol.

Weitere geeignete Diole sind die β-hydroxyalkylierten, besonders β-hydroxyethylierten Bisphenole, wie 2,2-Bis-[4′-(β-hydroethoxy)phenyl]-propan. Weitere Bisphenole sind später genannt.

Eine weitere Gruppe von aliphatischen Diolen sind jene der allgemeinen Formel I

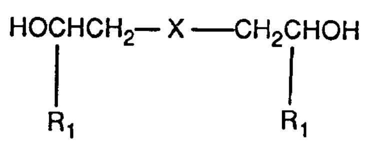

(I),

worin

$R_1$ für ein Wasserstoffatom oder Methyl, bevorzugt für ein Wasserstoffatom, und

X für einen Rest der Formeln stehen,

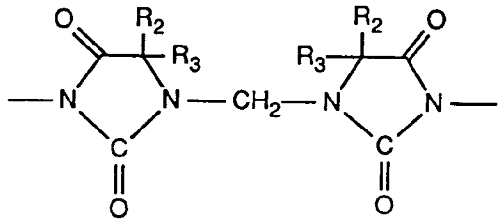

,

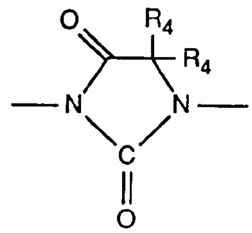

oder

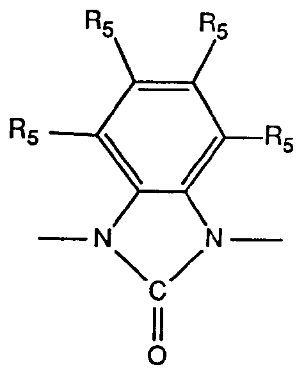

worin $R_2$, $R_3$ und $R_4$ unabhängig voneinander je ein Alkyl mit 1 bis 4 C-Atomen oder $R_2$ und $R_3$ oder beide $R_4$ zusammen Tetra- oder Pentamethylen bedeuten und $R_5$ unabhängig voneinander je für ein Wasserstoff-, Chlor- oder Bromatom steht.

Diese Diole sind bekannt und z.B. in den Offenlegungsschriften 18 12 003, 23 42 432, 23 42 372 und 24 53 326 beschrieben. Beispiele sind: N,N'-Bis-(β-hydroxyethyl-5,5-dimethyl)-hydantoin, N,N'-Bis-(β-hydroxypropyl-5,5-dimethyl)-hydantoin, Methylen-bis -[N,N'-(β-hydroxyethyl)-5-methyl-5-ethylhydantoin], Methylen-bis-[N-(β-hydroxyethyl)-5-dimethylhydantoin], N,N'-Bis-(β-hydroxyethyl)-benzimidazolon, -(tetrachlor)-benzimidazolon oder -(tetrabrom)-benzimidazolon.

Vorzugsweise bedeuten in Formel I $R_1$ ein Wasserstoffatom, $R_2$, $R_3$ und $R_4$ Methyl und alle $R_5$ je ein Wasserstoff-, Chlor- oder Bromatom.

Als aromatische Diole kommen einkernige Diphenole in Betracht und besonders zweikernige, die an jedem aromatischen Kern eine Hydroxylgruppe tragen. Unter aromatisch werden kohlenwasserstoffaromatische Reste, wie Phenylen oder Naphthylen, verstanden. Neben z.B. Hydrochinon sind besonders die Bisphenole zu nennen, die durch die folgende Formel dargestellt werden können:

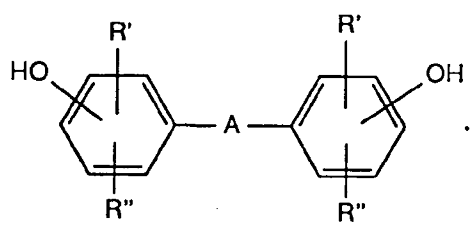

.

Die Hydroxylgruppen können sich in m-Stellung, besonders aber in p-Stellung, befinden. R' und R" können in dieser Formel Alkyl mit 1 bis 6 C-Atomen, Halogen, wie Chlor oder Brom, und insbesondere Wasserstoffatome bedeuten. A kann für eine direkte Bindung stehen, oder O, S, $SO_2$, gegebenenfalls substituiertes Alkyliden, Cycloalkyliden oder Alkylen bedeuten.

Beispiele für gegebenenfalls substituiertes Alkyliden sind Ethyliden, 1,1- oder 2,2-Propyliden, 2,2-Butyliden, 1,1-Isobutyliden, Pentyliden, Hexyliden, Heptyliden, Octyliden, Dichlorethyliden, Trichlorethyliden.

Beispiele für gegebenenfalls substituiertes Alkylen sind Methylen, Ethylen, Phenylmethylen, Diphenylmethylen und Methylphenylmethylen. Beispiele für Cycloalkyliden sind Cyclopentyliden, Cyclohexyliden,

Cycloheptyliden und Cyclooctyliden.

Beispiele für Bisphenole sind Bis-(p-hydroxyphenl)-ether oder -thioether, Bis-(p-hydroxyphenyl)-sulfon, Bis-(p-hydroxyphenyl)-methan, 1,2-Bis-(p-hydroxyphenyl)-ethan, 1-Phenyl-bis-(p-hydroxyphenyl)-methan, Diphenyl-bis-(p-hydroxyphenyl)-methan, 2,2-Bis-(4′-hydroxy-3′-dimethylphenyl)-propan, 1,1- oder 2,2-Bis-(p-hydroxyphenyl)butan, 1,1-Dichlor- oder 1,1,1-Trichlor-2,2-bis-(p-hydroxyphenyl)-ethan, 1,1-Bis-(p-hydroxyphenyl)-cyclopentan und besonders 2,2-Bis-(p-hydroxyphenyl)-propan (Bisphenol A) und 1,1-Bis-(p-hydroxyphenyl)-cyclohexan (Bisphenol C).

Geeignete Polyester von Hydroxycarbonsäuren sind z.B. Polycaprolacton, Polypivalolacton oder die Polyester von 4-Hydroxycyclohexancarbonsaüre oder 4-Hydroxybenzoesäure.

Polyester mit aromatischen Dicarbonsäuren haben die grösste Bedeutung erlangt, insbesondere die Polyalkylenterephthalate. Bevorzugt sind daher erfindungsgemässe Formmassen, in denen der Polyester aus mindestens 30 Mol-%, bevorzugt mindestens 40 Mol-% aromatischen Dicarbonsäuren und zu mindestens 30 Mol-%, vorzugsweise mindestens 40 Mol-% aus Alkylendiolen mit bevorzugt 2 bis 12 C-Atomen aufgebaut ist, bezogen auf den Polyester.

Insbesondere ist in diesem Fall das Alkylendiol linear und enthält 2 bis 6 C-Atome, wie z.B. Ethylen-, Tri-, Tetra- oder Hexamethylenglykol, und die aromatische Dicarbonsäure ist Terephthal- und/oder Isophthalsäure. Besonders bevorzugt ist der Polyester (A) Polyethylenterephthalat oder Poly- 1,4-butylenterephthalat.

Die erfindungsgemässen Formmassen enthalten als Styrol-Acrylnitril-Copolymerisat (B) bevorzugt ein Copolymerisat aus 30 bis 80 Gew.-% Styrol und/oder $\alpha$-Methylstyrol, 10 bis 30 Gew.-% Acrylnitril und 5 bis 40 Gew.-% Acrylester.

Das modifizierte Styrol-Acrylnitrilcopolymerisat (B) weist zweckmässig ein mittleres Molekulargewicht von mindestens 10 000, bevorzugt mindestens 50 000 und insbesondere mindestens 80 000 auf. Eine obere Grenze des Molekulargewichts ist durch Wirtschaftlichkeit und Herstellmethoden gegeben.

Die Modifizierung kann dergestalt geschehen, dass man Polymere eines Acrylester mit Styrol-Acrylnitril copolymerisiert (SAN). Für die erfindungsgemässen Formmassen verwendet man jedoch bevorzugt statistische Copolymere aus Styrol und/oder $\alpha$-Methylstyrol sowie Acrylnitril und Acrylsäureester.

Der Alkoholrest in der Estergruppe des Acrylsäureesters kann 1 bis 6, bevorzugt 1 bis 4 C-Atome enthalten. Besonders bevorzugt ist ein durch Pfropfpolymerisation modifiziertes SAN. Dieses wird im allgemeinen hergestellt, indem man ein Polymerisat des Modifizierungsmittels verwendet und durch Copolymerisation mit Styrol und Acrylnitril ein Pfropfpolymer herstellt.

Insbesondere bevorzugt ist ein mit Acrylesterelastomeren modifizertes SAN, bevorzugt als Pfropfpolymerisat. Solche werden kurz als ASA-Polymerisate bezeichnet und sind kommerziell erhältlich. Das Acrylesterelastomer ist meist ein Copolymerisat überwiegend aus Acrylsäureester mit z.B. Acrylnitril, $\beta$-Chlorethylvinylether, $\alpha$-Olefinen oder anderen. Es sind jedoch auch Homopolymerisate mit Elastomereigenschaften bekannt.

Die Polyester der erfindungsgemässen Formmasse werden nach den in der Technik bekannten Verfahren hergestellt, z.B. Lösungs- oder azeotrope Kondensation, Grenzflächen-, Schmelz- oder Festphasenkondensation sowie Kombinationen dieser Methoden, je nachdem, welche polyesterbildende Derivate und Reaktionskatalysatoren man verwendet. Als Katalysatoren sind Amine, anorganische oder organische Säuren, Metalle, Metallverbindungen und deren Mischungen zu nennen.

Als bromierte Polystyrole (C) können die erfindungsgemässen Formmassen bromierte oligomere oder bromierte polymere Styrole enthalten. Diese entsprechen der Formel II

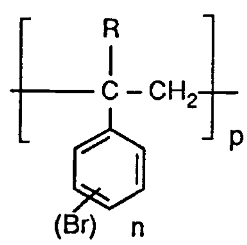

(II),

worin p für den Polymerisationsgrad steht, n unabhängig voneinander je für eine Zahl zwischen 1 bis 5, vorzugsweise zwischen 2 bis 4, insbesondere für die Zahl 3, steht und R unabhängig voneinander je ein Wasserstoffatom oder einen aliphatischen Rest mit 1 bis 10 C-Atomen, vorzugsweise für ein Wasserstoffatom oder ein $C_1$-$C_4$-Alkyl, insbesondere für ein Wasserstoffatom, bedeutet.

Vorzugsweise liegt der Polymerisationsgrad p der bromierten oligomeren Styrole zwischen 2 und 20 und der der bromierten polymeren Styrole über 20, insbesondere zwischen 100 bis 6000.

Die erfindungsgemäss zu verwendenden bromierten oligomeren und polymeren Styrole enthalten zwischen

40 bis 80 Gew.-%, vorzugsweise zwischen 50 bis 70 Gew.-%, Brom. Bei diesen Substanzen handelt es sich zum Teil um unschmelzbare, weitgehend unlösliche Substanzen. Sie können hergestellt werden entweder durch Bromierung von oligomeren oder polymeren Styrolen, wie sie beispielsweise durch thermische Polymerisation von Styrol erhalten werden, oder durch Polymerisation von entsprechend bromierten Styrolen. Solche Verfahren sind unter anderem aus der Patentliteratur bekannt und werden beispielsweise in den DE-Offenlegungsschriften 25 37 385, 26 51 435 und 28 00 012, im EP-Patent 20 294 und im US-Patent 4,200,703 beschrieben.
Bromierte Polystyrole sind im Handel erhältlich, beispielsweise unter der Bezeichnung PYRO-CHEK®68PB und PYRO-CHEK®60PB der Firma Ferro Corporation.

Als Antimonverbindungungen für die Komponente (C) kommen im allgemeinen alle als Synergisten für bromiertes Polystyrol bekannten Antimonverbindungen in Frage, vorzugsweise $Sb_2O_3$ und $Sb_2O_5$, insbesondere $Sb_2O_3$ welche auch auf geeigneten anorganischen Trägern, wie beispielsweise auf feinteiligem Kaolin, calciniertem Kaolin oder Talkum, aufgezogen sein können oder als Masterbatch, eingearbeitet in einem linearen thermo-plastischen Polyester, wie Polybutylenterephthalat, vorliegen können.

Als Verstärkungsmittel und Füllstoffe (D) können den erfindungsgemässen Formmassen die üblichen verstärkenden Füllstoffe, wie beispielsweise Glasfasern oder Glaskugeln, und die dafür gebräuchlichen Füllstoffe, wie beispielsweise Talkum, Calciumcarbonat, Bariumsulfat, $SiO_2$, Kaolin, Micro-Mica oder Wollastonit, zugegeben werden. Vorzugsweise enthalten die erfindungsgemässen Formmassen als Komponente (D) Glasfasern und Füllstoffe, insbesondere nur Glasfasern.

Die erfindungsgemässen Formmassen können als übliche Zusätze (E) die in der Technologie von Formmassen gebräuchlichen Zusatzstoffe und Verarbeitungshilfsmittel enthalten, wie beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel und Weichmacher. Solche Zusätze werden in den üblichen wirksamen Mengen eingesetzt.

Bei der Aufarbeitung der Polyesterschmelzen, bereits vor der Polykondensation oder beim Vermischen der Polyester mit modifiziertem Styrolacrylnitril können inerte Zusätze aller Art zugegeben werden, wie z.B. Füllstoffe, wie Talkum, $SiO_2$, Kaolin, Micro-Mica, Wollastonit, verstärkende Füllstoffe, wie Glasfasern, Glaskugeln, anorganische oder organische Pigmente, optische Aufheller, Mattierungsmittel, Verarbeitungshilfsmittel, wie Gleitmittel, Entformungsmittel und kristallisationsfördernde Mittel, Nukleierungsmittel und Stabilisatoren, wie phosphororganische Verbindungen, z.B. Triphenylphosphit. Die Zusätze können auch erst bei der Herstellung der erfindungsgemässen Formmassen zugegeben werden, für sich oder auch eingearbeitet in das modifizierte SAN.

Die Stabilisatoren können den erfindungsgemässen Formmassen in jedem Stadium der Herstellung der thermoplastischen Massen zugesetzt werden. Vorzugsweise werden die Stabilisatoren zu einem frühen Zeitpunkt zugesetzt, um zu verhindern, dass die Zersetzung bereits beginnt, bevor die Formmasse geschützt werden kann.

Zu den Oxidationsverzögerern und Wärmestabilisatoren, die den erfindungsgemässen Formassen zugesetzt werden können, gehören diejenigen, die allgemein zu Polymeren zugesetzt werden, wie Halogenide von Metallen der Gruppe I des periodischen Systems, z.B. Natrium-, kalium- und Lithium-Halogenide in Verbindung mit Kupfer-(I)-Halogeniden, z.B. Chloriden, Bromiden oder Jodiden. Ferner sind geeignete Satbilisatoren sterisch gehinderte Phenole, Hydrochinone, verschiedene substituierte Vertreter dieser Gruppe und Kombinationen derselben in Konzentrationen bis 1 Gew.-%, bezogen auf das Gewicht der Formmasse.

Als UV-Stabilisatoren kann man ebenfalls diejenigen, die allgemein zu Polymeren zugesetzt werden, in Mengen bis zu 2,0 Gew.-%, bezogen auf das Gesamtgewicht der Formmasse verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 4 Gew.-% der Formmasse zugesetzt werden, sind unter anderem Stearinsäuren, Stearylalkohol, Stearinsäueester und -amide, sowie Montanwachse, inclusive deren Veresterungs- und Verseifungsprodukten.

Ferner können zugesetzt werden organische Farbstoffe, wie Nigrosin, Pigmente, z.B. Titandioxid, Cadmiumsulfid, Cadmiumsulfid-selenid, Phthalocyanine, Ultramarinblau oder Russ.

Auch Keimbildungsmittel, wie Trum, Calciumfluorid, Natriumphenylphosphinat, Aluminiumoxid oder feinteiliges Polytetrafluorethylen, können in Mengen z.B. bis zu 5 Gew.-%, bezogen auf die Masse, angewandt werden. Weichmacher, wie Phthalsäure-dioctylester, Phthalsäuredibenzylester, Phthalsäurebutylbenzylester, Kohlenwasserstofföle, N-(n-Butyl)benzolsulfonamid oder o- und p-Toluolethylsulfonamid werden vorteilhaft in Mengen bis etwa 20 Gew.-%, bezogen auf die Formmasse, zugesetzt. Färbemittel, wie Farbstoffe und Pigmente, können in Mengen bis zu etwa 5 Gew.-%, bezogen auf die Formmasse, zugesetzt werden.

Vorzugsweise enthalten die erfindungsgemässen Formassen als übliche Zusätze Gleitmittel, Stabilisatoren, Pigmente, Lichtschutzmittel, Polytetrafluorethylen, Tricalciumphosphat oder Calciumhydrosilikat, insbesondere Polytetrafluorethylen.

Die erfindungsgemässen Formmassen werden z.B. hergestellt, indem die Polyester in Form ihrer Granulate zusammen mit einem modifizierten SAN-Polymer umgranuliert werden (Vermischen in der Schmelzphase, Austragen und Abkühlen der Schmelze und Granulieren). Hierfür sind die üblichen Rektoren geeignet. Vorteilhaft erfolgt diese Herstellung kontinuierlich in Extrudern.

Es genügt jedoch auch, Mischungen der Granulate von Polyestermischungen oder ihren Einzelbestandteilen mit den modifizierten SAN-Polymeren zu verwenden. Besonders vorteilhaft werden diese Granulatmischungen direkt zu Formteilen verarbeitet, z.B. mittels Spritzguss- und Extrusionsverfahren, da die Einzelbestandteile überraschend gut verträglich und mischbar sind.

Bei den erfindungsgemässen Formmassen werden überraschend im gesamten Mischungsbereich hervorragende Zähigkeitseigenschaften festgestellt. Auch andere mechanische Eigenschaften sind überraschend gut, z.B. die Steifigkeit und Wärmeformbeständigkeit. Sie sind problemlos verarbeitbar und, obwohl sie hohe Erweichungstemperaturen besitzen, wird überraschend keine Versprödung beobachtet.

Die erfindungsgemässen Formmassen können teilkristallin bis amorph sein, je nachdem, welche Einzelbestandteile enthalten sind und in welchen Mengenverhältnissen diese eingesetzt werden. Sie stellen thermoplastische Materialien dar, aus denen sich nach den gebräuchlichen Formgebungsverfahren, wie Giessen, Spritzgiessen oder Extrudieren, das heisst, unter Erwärmung und Formgebung der Formmasse, Formkörper mit wertvollen Eigenschaften herstellen lassen. Im allgemeinen werden beim Formgebungsverfahren Temperaturen zwischen 50 bis 300°C, vorzugsweise zwischen 80 bis 250°C; eingesetzt. Beispiele für solche Formkörper sind technische Apparateteile, Apparategehäuse, Haushaltgeräte, Bauteile für die Elektro- und Eletronikindustrie und Elektroisolationen, Automobilteile und Halbzeuge, die spanabhebend verformt werden können.

Beispiele 1 und 2:

Mit Hilfe eines Labor-Co-Kneters mit einem Schneckendurchmesser 46 mm werden die in der folgenden Tabelle aufgeführten Komponenten bei einer Temperatur von 250°C compoundiert und granuliert.

Nach einer Trocknung von 4 Stunden bei 120°C erfolgt die Verarbeitung zu Spritzgiesskörpern auf einer Schnecken-Spritzgiessmaschine "Arburg Allrounder Typ 270-210-500".

Die Herstellbedingungen der Probekörper betragen:

| | |
|---|---|
| Zylinder-Temperatur | = 250°C, |
| Werkzeug-Temperatur | = 80°C, |
| Zykluszeit | = bis 35 Sekunden. |

An den Formkörpern werden die in der folgenden Tabelle 1 aufgeführten Eigenschaften gemessen.

Tabelle 1

| Beispiel | 1 | 2 |
|---|---|---|
| PBT[1)] [Gew.-%] | 40,1 | 35,0 |
| ASA[2)] [Gew.-%] | 24,4 | 21,5 |
| bromiertes Polystyrol[3)] [Gew.-%] | 11,5 | 10,5 |
| $Sb_2O_3$ [Gew.-%] | 4,5 | 3,5 |
| Polytetrafluorethylen[4)] | 1,5 | 1,5 |
| Glasfasern [Gew.-%] | 18,0 | 28,0 |
| Bruchdehnung gemäss DIN 53 455 [%] | 2,2 | 1,9 |
| Zug-E-Modul gemäss DIN 53 457 [MPa] | 8000 | 10800 |
| Wärmeformbeständigkeit gemäss ISO 75, Verfahren B [°C] | 215 | 215 |
| Brennbarkeit 0,16 cm gemäss UL[x)] 94 | V-0 | V-0 |
| Vergleichszahl der Kriechwegbildung CTI[xx)] gemäss (IEC[xxx)] 112) | 400 | 400 |

1) Polybutylenterephthalat mit einer Intrinsic Viskosität von 0,92 dl/g, gemessen in Phenol/o-Dichlorbenzol-Gemisch (Gew.-Verhältnis 1:1), 30°C, Ubbelohde-Viskosimeter

2) Acrylnitril-Styrol-Acrylester-Copolymer (ASA), Luran®S 757 R natur, der Firma BASF

3) PYRO-CHEK®68 PB der Firma Ferro Corp.

4) Polytetrafluorethylen-Pulver, Teflon®MP 1500 der Firma DuPont

x) UL = Underwriter's Laboratories

xx) CTI = Comperative Tracking Index

xxx) IEC = Int. Electric Commission

Beispiele 3-11

Herstellung von Compounds: Mit Hilfe eines, einen Schneckendurchmesser von 46 mm aufweisenden Labor-Co-kneters werden die in der folgenden Tabelle aufgeführten Komponenten bei einer Temperatur von 250°C compoundiert und granuliert. Nach einer Trocknung von 4 Stunden bei 120°C erfolgt die Verarbeitung auf einer Schnecken-Spritzgiessmaschine Arburg-Allrounder, Typ 270-210-500. Die Herstellungsbedingungen der Probekörper betragen:

| | |
|---|---|
| Zylinder-Temperatur | = 250°C |
| Werkzeug-Temperatur | = 80°C |
| Zykluszeit | bis 35 sec. |

An den Formkörpern werden die in der nachfolgenden Tabelle 2 aufgeführten Eigenschaften gemessen.

Tabelle 2:

| Beispiel | 3 | 4 | 5 | 6 | 7 | 8 | 9 | 10 | 11 |
|---|---|---|---|---|---|---|---|---|---|
| PBT[1)] [Gew.-%] | 40,1 | 40,1 | 40,1 | 35,0 | 35,0 | 35,0 | 34,3 | 34,3 | 34,3 |
| ASA[2)] [Gew.-%] | - | - | - | - | - | - | 21,5 | 21,5 | 21,5 |
| ASA[5)] [Gew.-%] | 24,4 | - | - | 21,5 | - | - | - | - | - |
| ASA[6)] [Gew.-%] | - | 24,4 | - | - | 21,5 | - | - | - | - |
| ASA[7)] [Gew.-%] | - | - | 24,4 | - | - | 21,5 | - | - | - |
| bromiertes Polystyrol[3)] [Gew.-%] | 11,5 | 11,5 | 11,5 | 10,5 | 10,5 | 10,5 | - | - | - |
| bromiertes Polystyrol[8)] [Gew.-%] | - | - | - | - | - | - | 10,2 | - | - |
| bromiertes Polystyrol[9)] [Gew.-%] | - | - | - | - | - | - | - | 10,2 | - |
| bromiertes Polystyrol[11)] [Gew.-%] | - | - | - | - | - | - | - | - | 10,2 |
| $Sb_2O_3$ [Gew.-%] | 4,5 | 4,5 | 4,5 | 3,5 | 3,5 | 3,5 | 3,5 | 3,5 | 3,5 |
| Polytetrafluorethylen[4)] [Gew.-%] | 1,5 | 1,5 | 1,5 | 1,5 | 1,5 | 1,5 | - | - | - |
| Glasfaser [Gew.-%] | 18,0 | 18,0 | 18,0 | 28,0 | 28,0 | 28,0 | 28,0 | 28,0 | 28,0 |
| Xonotlit [Gew.-%] | | | | | | | 2,5 | 2,5 | 2,5 |
| Bruchdehnung gemäss DIN 53455 [%] | 2,3 | 2,4 | 2,3 | 2,0 | 2,1 | 2,2 | 2,0 | 1,9 | 1,8 |
| Zug-E-Modul gemäss DIN 53457 [MPa] | 8000 | 7800 | 8300 | 10500 | 10400 | 10100 | 11000 | 10900 | 11000 |
| Wärmeformbeständigkeit gemäss ISO 75 Verfahren B [°C] | 213 | 216 | 214 | 217 | 216 | 216 | 215 | 216 | 214 |
| Brennbarkeit 0,16 cm gemäss UL 94 | V-O | V-O | V-O | V-O | V-O | V-O | V-O | V-O | V-O |
| Vergleichszahl der Kriechwegbildung CTI gemäss IEC 112 | 400 | 400 | 400 | 400 | 400 | 400 | 425 | 475 | 450 |

2) Acrylnitril-Styrol-Acrylester-Copolymer enthaltend 25 Gew.-% Acrylnitril und 27,5 Gew.-% Styrol und 40 Gew.-% α-Methylstyrol und 7,5 Gew.-% Acrylester.

3) Acrylnitril-Styrol-Acrylester-Copolymer enthaltend 25 Gew.-% Acrylnitril und 67,5 Gew.-% Styrol und 7,5 Gew.-% Acrylester.

6) Acrylnitril-Styrol-Acrylester-Copolymer enthaltend 22 Gew.-% Acrylnitril; 48 Gew.-% Styrol und 30 Gew.-% Acrylester; Intrinsic Viskosität = 1,53 dl/g, gemessen in Phenol/o-Dichlorbenzol (1:1), bei 30°C.

7) Acrylnitril-Styrol-Acrylester-Copolymer enthaltend 22 Gew.-% Acrylnitril; 48 Gew.-% Styrol und 30 Gew.-% Acrylester; Intrinsic Viscosität = 1,30 dl/g, gemessen in Phenol/o-Dichlorbenzol (1:1), bei 30°C.

8) Pyrocheck 60 PB mit 61 Gew.-% Brom.

9) Polydibromstyrol; 59 Gew.-% Brom; Schmelzpunkt 155-160°C.

10) Polydibromstyrol; 59 Gew.-% Brom; Schmelzpunkt 220-240°C.

## Patentansprüche

1. Verstärkte, flammhemmende thermoplastische Formmassen, enthaltend
   A) 10 bis 75 Gew.-%, bezogen auf die Menge der Komponenten (A) und (B), eines linearen thermoplastischen Polyesters, Copolyesters oder eines Gemisches davon,
   B) 25 bis 90 Gew.-%, bezogen auf auf die Menge der Komponenten (A) und (B), eines Styrol-Acrylnitril-Copolymersates,
   C) bromiertes Polystyrol in Kombination mit einer oder mehreren Antimonverbindungen als Flammschutzmittel,
   D) Verstärkungsmittel, Füllstoffe oder beides und
   E) übliche Zusätze,
   wobei die Menge der Komponenten (A), (B), (C), (D) und (E) zusammen 100 Gew.-% ergibt, dadurch gekennzeichnet, dass das Styrol-Acrylnitril-Copolymerisat (B) ein Copolymerisat aus 10 bis 85 Gew.-% Styrol, α-Methylstyrol oder eines Gemisches davon, 5 bis 40 Gew.-% Acrylnitril und 5 bis 50 Gew.-% eines im wesentlichen halogenmethylgruppenfreien Acrylesters ist.

2. Formmassen gemäss Anspruch 1, enthaltend
   A) 15 bis 75 Gew.-%, bezogen auf die Menge der Komponenten (A) und (B), eines linearen thermoplastischen Polyesters, Copolyesters oder eines Gemisches davon,
   B) 25 bis 85 Gew.-%, bezogen auf auf die Menge der Komponenten (A) und (B), eines modifizierten Styrol-Acrylnitril-Copolymersates,
   C) 3 bis 30 Gew.-%, bezogen auf die Gesamtmischung, bromiertes Polystyrol in Kombination mit einer oder mehreren Antimonverbindungen,
   D) 5 bis 50 Gew.-%, bezogen auf die Gesamtmischung, Glasfasern, Füllstoffe oder beides und
   E) als übliche Zusätze Gleitmittel, Stabilisatoren, Pigmente, Lichtschutzmittel, Calciumhydrosilikat, Polytetrafluorethylen oder Tricalciumphosphat.

**3.** Formmassen gemäss Anspruch 1, dadurch gekennzeichnet dass der Polyester (A) kristallin oder teilkristallin ist oder in amorpher Form eine Glasumwandlungstemperatur von mindestens 100°C aufweist.

**4.** Formmassen gemäss Anspruch 1, dadurch gekennzeichnet, dass der Polyester (A) Polyethylenterephthalat oder Poly- 1,4-butylenterephthalat ist.

**5.** Formmassen gemäss Anspruch 1, dadurch gekennzeichnet, dass die Komponente (B) ein Acrylnitril-Styrol-Acrylester-Copolymer ist.

**6.** Formmassen gemäss Anspruch 1, dadurch gekennzeichnet, dass die Komponente (B) ein Copolymerisat aus 30 bis 80 Gew.-% Styrol, $\alpha$-Methylstyrol oder eines Gemisches aus Styrol und $\alpha$-Methylstyrol, 10 bis 30 Gew.-% Acrylnitril und 5 bis 40 Gew.-% Acrylsäureester ist.

**7.** Formmassen gemäss Anspruch 1, dadurch gekennzeichnet, dass die Komponente (C) aus einem bromierten Polystyrol mit einem Bromgehalt von 40 bis 80 Gew.-% Brom und $Sb_2O_3$ besteht.

**8.** Formmassen gemäss Anspruch 1, dadurch gekennzeichnet, dass die Komponente (C) aus einem bromierten Polystyrol mit einem Bromgehalt von 50 bis 70 Gew.-% und $Sb_2O_3$ besteht.

**9.** Formmassen gemäss Anspruch 1, dadurch gekennzeichnet, dass sie als Komponente (D) Verstärkungsmittel enthalten.

**10.** Formmassen gemäss Anspruch 1, dadurch gekennzeichnet, dass sie als Komponente (D) Glasfasern enthalten.

**11.** Formmassen gemäss Anspruch 1, dadurch gekennzeichnet, dass sie als Komponente (E) Polytetrafluorethylen enthalten.

**12.** Die aus den Formmassen gemäss Anspruch 1 unter Formgebung hergestellten Formkörper.

Europäisches Patentamt

# EUROPÄISCHER RECHERCHENBERICHT

Nummer der Anmeldung
EP 92 81 0757

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
| Y<br><br><br>D | FR-A-2 376 183 (ALKOR G.M.B.H UND CIBA-GEIGY AG)<br>* Ansprüche 1-3,7-8,10-12 *<br>& DE-A-2 758 497<br>--- | 1-6, 9-10,12 | C08L67/02<br>C08L25/08<br>//<br>(C08L67/02, 25:08, 25:18)<br>(C08L25/08, 67:02, 25:18) |
| Y | EP-A-0 376 261 (CIBA-GEIGY AG)<br>* Ansprüche 1-2,4,9-10,12,14 *<br>* Seite 4, Zeile 34 - Zeile 52 *<br>--- | 1-6, 9-10,12 | |
| A | PATENT ABSTRACTS OF JAPAN<br>vol. 10, no. 90 (C-337)(2147) 8. April 1986<br>& JP-A-60 223 855 ( TEIJIN KK ) 8. November 1985<br>* Zusammenfassung *<br>--- | 1-2,4, 7-10 | |
| A | DATABASE WPI<br>AN=79-852858 (47),<br>Derwent Publications Ltd., London, GB;<br>Woche B47, Klasse A23, Seite 17<br>& JP-A-54 133 547 (MITSUBISHI RAYON KK) 17. Oktober 1979<br>----- | 1-2,4-6, 9-10,12 | RECHERCHIERTE SACHGEBIETE (Int. Cl.5 )<br><br>C08L |

Der vorliegende Recherchenbericht wurde für alle Patentansprüche erstellt

| Recherchenort | Abschlußdatum der Recherche | Prüfer |
|---|---|---|
| DEN HAAG | 23 FEBRUAR 1993 | Kathryn Y.-P. Miao |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)